Europäisches Patentamt

European Patent Office

Office européen des brevets

(11) Veröffentlichungsnummer: **0 252 202**
**A1**

(12) **EUROPÄISCHE PATENTANMELDUNG**

(21) Anmeldenummer: **86890203.2**

(22) Anmeldetag: **07.07.86**

(51) Int. Cl.4: **A62C 27/00** , **B62D 21/16**

(43) Veröffentlichungstag der Anmeldung:
**13.01.88 Patentblatt  88/02**

(84) Benannte Vertragsstaaten:
**AT BE CH DE FR IT LI LU NL**

(71) Anmelder: **Hötzl, Josef**
**Schreinergasse 9**
**A-3100 St. Pölten(AT)**

(72) Erfinder: **Hötzl, Josef**
**Schreinergasse 9**
**A-3100 St. Pölten(AT)**

(74) Vertreter: **Weinzinger, Arnulf, Dipl.-Ing. et al**
**Riemergasse 14**
**A-1010 Wien(AT)**

(54) **Tanklöschfahrzeug.**

(57) Es wird ein Tanklöschfahrzeug (1) mit einem Fahrzeugrahmen (4) beschrieben, der eine Fahrer- bzw. Mannschaftskabine (2) und einen Laderaum (3) sowie eine vordere und wenigstens eine hintere Radachse trägt, und bei dem ein flacher, tiefliegender Löschmitteltank (7) in der Ebene des starr ausgebildeten Fahrzeugrahmens (4) zwischen den Radachsen angeordnet und in diesen Fahrzeugrahmen integriert ist, wobei der Fahrzeugrahmen (4) insbesondere zwei durch den Löschmitteltank (7) hindurchgehende Längsträger (20, 21) aufweist, die die vordere und die hintere Querwand (18, 19) des Löschmitteltanks durchsetzen und mit diesen Querwänden fest, z. B. durch Verschweißen, verbunden sind.

Fig. 1

## TANKLÖSCHFAHRZEUG

Die Erfindung betrifft ein Tanklöschfahrzeug mit einem Fahrzeugrahmen, der eine Fahrer-bzw. Mannschaftskabine und einen Laderaum sowie eine vordere und wenigstens eine hintere Radachse trägt, und mit einem flachen, tiefliegend angebrachten Löschmitteltank.

Aus der GB-A-704 272 ist ein Tanklöschfahrzeug bekannt, bei dem im hinteren Fahrzeugbereich ein flacher Löschmitteltank vorgesehen ist, der auf dem Fahrzeugrahmen aufliegt. Wenngleich dabei der Löschmitteltank verhältnismäßig flach ausgebildet ist, so ist doch von Nachteil, daß der auf den Rahmen gestellte Löschmitteltank einen relativ hohen Gesamtschwerpunkt des Fahrzeuges mit sich bringt, was sich beim Fahren nachteilig auswirkt. In der Folge ist bei dieser Bauweise von Nachteil, daß für die Unterbringung von Geräten oberhalb des Löschmitteltanks verhältnismäßig wenig Platz verbleibt bzw. daß für die Unterbringung der Geräte, sofern hiefür ein Laderaum vorgesehen wird, eine Vergrößerung des Laderaums nach oben hin oder nach hinten vorgesehen werden muß.

Ein anderes Tanklöschfahrzeug, das allerdings als vergleichsweise kleiner Kastenwagen ausgebildet ist, ist in der EP-A-125 234 beschrieben. Auch bei diesem bekannten Kastenwagen-Tanklöschfahrzeug liegt der Löschmitteltank auf dem Fahrzeugrahmen auf, wobei eine ausreichend tiefliegende Lage des Tanks nur bei dieser leichten Kastenwagenbauart erreichbar ist und auch hier verhältnismäßig wenig Platz für Geräte zur Verfügung steht.

Es ist nun Ziel der Erfindung, ein - auch als Schwerfahrzeug realisierbares - Tanklöschfahrzeug der eingangs angegebenen Art derart zu verbessern, daß der Gesamtschwerpunkt des Fahrzeuges in einer noch geringeren Höhe als bei den bekannten Tanklöschfahrzeugen zu liegen kommt und überdies eine günstige Gestaltung des Laderaums wie auch der Fahrer-bzw. Mannschaftskabine ermöglicht wird.

Diese Aufgabe wird beim Tanklöschfahrzeug der eingangs angegebenen Art erfindungsgemäß dadurch gelöst, daß der Löschmitteltank in der Ebene des starr ausgebildeten Fahrzeugrahmens zwischen den Radachsen angeordnet und in diesen Fahrzeugrahmen integriert ist.

Anders als bei den bekannten Tanklöschfahrzeugen wird bei der erfindungsgemäßen Lösung der Löschmitteltank somit in den Fahrzeugrahmen mit eingebaut, wobei der Löschmitteltank noch tiefer als bisher zu liegen kommt. Dadurch kann - bei vollem Löschmitteltank - der Gesamtschwerpunkt auf eine noch geringere Höhe gebracht werden. Außerdem ergibt sich eine bessere Platzausnutzung, da nun der Raum im Bereich des Fahrzeugrahmens genutzt wird. Dies wirkt sich umgekehrt in einem Platzgewinn im Laderaum und in der Fahrer-bzw. Mannschaftskabine aus, wobei es insbesondere möglich wird, eine Fahrer-bzw. Mannschaftskabine mit einem ebenen, tiefliegenden Boden vorzusehen, die eine verhältnismäßig große Innenraumhöhe aufweisen kann. Beispielsweise kann bei einer Fahrzeughöhe im Bereich von 2600 mm bis 2800 mm eine Innenraumhöhe der Kabine von ca. 1600 mm bis 1800 mm erreicht werden. Die Mannschaft kann sich so noch während der Fahrt beispielsweise mit Atemschutzgeräten leicht ausrüsten, da die Kabine praktisch Stehhöhe besitzt. Auch ist es bei der vorliegenden Bauweise möglich, eine niedrige Aufstiegshöhe vorzusehen. Ein nicht unwesentlicher Vorteil ist schließlich auch darin gelegen, daß ein ebener Boden nicht nur sicher ist, sondern auch preisgünstig gestaltet werden kann.

Der Geräteraum, d.h. Laderaum, für die Aufnahme von Ausrüstungsgegenständen ist zum Teil über dem Löschmitteltank gelegen, wobei vorgesehen werden kann, daß sich Motor und Getriebeschacht oberhalb des Löschmitteltanks und im Inneren des Geräteraums befinden. Eine derartige Anordnung von Motor und Getriebe bringt eine gute Gewichtsverteilung mit sich, und andererseits stellt die etwas geringere Wartungsfreundlichkeit einer solchen Mittelmotoranordnung tatsächlich keinen besonderen Nachteil dar, da Feuerwehrfahrzeuge erfahrungsgemäß in den zwanzig bis fünfundzwanzig Jahren ihrer Einsatzzeit pro Jahr maximal 2000 km bis 2500 km gefahren werden, woraus ein geringer Wartungsaufwand resultiert.

Der Motor und das Getriebe können dabei insbesondere schwingungs-und schallgedämpft am Rahmen aufgesetzt werden. Die Kardanwelle - im Fall einer Ausbildung mit Allradantrieb beide Kardanwellen - wird (bzw. werden) z. B. in einem Tunnel ohne Zwischenlagerung geführt.

Im Hinblick auf eine besonders stabile, steife Konstruktion werden vorzugsweise die vom Löschmitteltank nach vorne und nach hinten auskragenden Teile des Fahrzeugrahmens als - an sich bekannte - Leiterrahmen ausgebildet.

Zur Erzielung eines besonders großen Tankvolumens ist es ferner vorteilhaft, wenn der Fahrzeugrahmen zwei durch den Löschmitteltank hindurchgehende Längsträger aufweist, die die vordere und die hintere Querwand des Löschmitteltanks durchsetzen und mit diesen Querwänden fest verbunden sind. Die Längsträger sind dabei zweckmäßigerweise Vollwandträger, beispielsweise mit C-Querschnitt. Um dabei eine besonders stabile Verbindung zu erhalten, ist es günstig, wenn die Längsträger in vertikalen Schlitzen in den Querwänden des Löschmitteltanks aufgenommen und mit den Querwänden längs ihres Umfangs verschweißt sind.

Aus Stabilitätsgründen hat es sich hier auch als vorteilhaft erwiesen, wenn die Längsträger im Bereich des Löschmitteltanks eine größere Höhe als in ihren auskragenden Teilen aufweisen. Dabei ist es weiters günstig, wenn die Längsträger im Inneren des Löschmitteltanks eine Höhe im wesentlichen gleich dessen Höhe aufweisen und über an der Unterseite vorgesehene Abschrägungen, die noch im Tankinneren zur Belassung von Durchgängen für das Löschmittel unterhalb der das Tankinnere ansonsten in Kammern unterteilenden Längsträger beginnen, in die auskragenden Teile übergehen.

Vorzugsweise sind die Längsträger im Inneren des Löschmitteltanks als Schwallwände ausgebildet. Zu diesem Zweck können die Längsträger beispielsweise kreisförmige Durchtrittsöffnungen im Bereich des Tankinneren aufweisen.

An sich ist es aber auch denkbar, daß der Fahrzeugrahmen zwei Längsträger aufweist, die - anstatt durch den Tank hindurchzugehen - die Längsseitenwände des Löschmitteltanks bilden. Eine derartige Konstruktion ist vergleichsweise einfacher, jedoch ist in der Regel nur ein geringeres Tankvolumen erzielbar, da der Tank dann eine kleinere Breite aufweist, es sei denn, es werden mehrfach abgewinkelte bzw. gekröpfte Längsträger verwendet, die in ihrem mittleren Abschnitt einen größeren Abstand voneinander aufweisen als in ihren vorderen und hinteren, auskragenden Endabschnitten.

Wie bereits erwähnt können Motor und Getriebe des Fahrzeuges auf dem Fahrzeugrahmen - zumindest teilweise über dem Löschmitteltank - angeordnet sein, und vorzugsweise erstreckt sich dann zumindest ein röhrenförmiger Tunnel für die Durchführung einer Kardanwelle im Tankinneren von einer Öffnung an der Tankoberseite zur entsprechenden Tankquerwand, d.h. in Richtung zur angetriebenen Achse.

Von besonderem Vorteil ist es im Hinblick auf die Integration des Tanks in den Rahmen und die damit zu fordernde Festigkeit und Beständigkeit auch, wenn zumindest die Innenseite des Löschmitteltanks sowie falls vorhanden die hindurchgehenden Längsträger und/oder der oder die Kardanwellen-Tunnel· mit einem korrosionsbeständigem Schutzüberzug, insbesondere aus Kunststoff, versehen sind.

Da bei der gegebenen Bauweise der Löschmitteltank im Bereich der Unterseite sowie auch der Seitenwände zur Umgebung hin ungeschützt und so auch dem Fahrtwind ausgesetzt ist, was bei kalter Witterung zu Problemen in Hinblick auf Vereisungen führen könnte, wobei auch keine Erwärmung durch eine vom Motor erwärmte, vorbeistreichende Luft erfolgt, ist es schließlich erfindungsgemäß von Vorteil, wenn die Wände des Löschmitteltanks, insbesondere auf der Innenseite, mit einer wärmeisolierenden Verkleidung ausgestattet sind.

Weitere Vorteile und Merkmale der Erfindung ergeben sich aus der nachfolgenden Beschreibung von besonders bevorzugten Ausführungsbeispielen unter Bezugnahme auf die Zeichnung. Im einzelnen zeigen in der Zeichnung:

Fig. 1 eine schematische Ansicht eines Tanklöschfahrzeuges mit Fahrzeugrahmen und Löschmitteltank gemäß der Erfindung;

Fig. 2 eine schematische Draufsicht auf dieses Tanklöschfahrzeug gemäß Fig. 1, wobei der Fahrzeugrahmen mit dem integrierten Löschmitteltank schematisch eingezeichnet ist;

Fig. 3 eine Rückansicht dieses Tanklöschfahrzeuges gemäß Fig. 1 und 2, ebenfalls mit - schematisch eingezeichnetem Fahrzeugrahmen mit Löschmitteltank;

Fig. 4 eine ausschnittsweise Ansicht eines Teiles der beim Fahrzeugrahmen des Tanklöschfahrzeuges gemäß Fig. 1 bis 3 vorgesehenen Längsträger, um die Ausbildung als Schwallwand im Tankinneren zu veranschaulichen; und

Fig. 5 in einer Ansicht ähnlich Fig. 1 eine modifizierte Ausführungsform eines Tanklöschfahrzeuges gemäß der Erfindung.

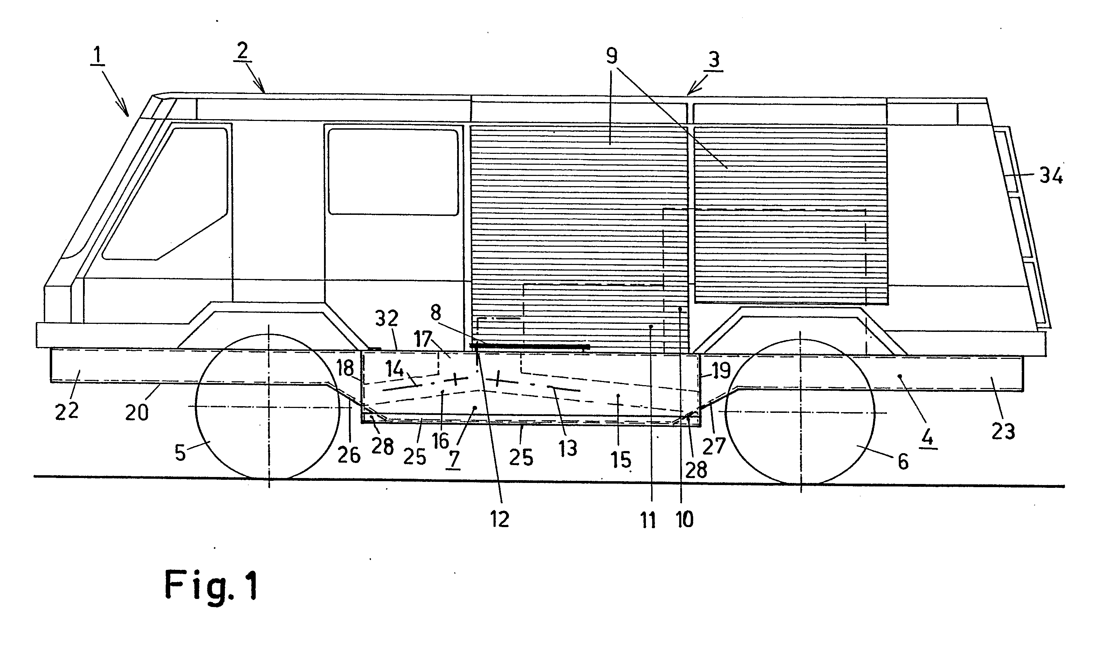

Das in den Fig. 1 bis 3 veranschaulichte Tanklöschfahrzeug 1 weist in an sich herkömmlicher Weise in seinem vorderen Bereich eine Fahrer-bzw. Mannschaftskabine 2 und in seinem hinteren Bereich einen Geräte-bzw. Laderaum 3 auf, wobei als Basis für die Kabine 2 bzw. den Laderaum 3 ein starrer Fahrzeugrahmen 4 dient, der auch -über nicht näher dargestellte Federn, z.B. Blattfedern oder aber eine Luftfederung - vordere und hintere Achsen mit Rädern 5 bzw. 6 trägt.

In den Fahrzeugrahmen 4 integriert ist ein flacher Löschmitteltank 7 vorgesehen, der zwischen den Achsen angeordnet ist und mit dem Fahrzeugrahmen 4 eine starre Einheit bildet, d.h. ein Teil dieses starren Fahrzeugrahmens 4 ist. Der Löschmitteltank 7 ist, wie sich aus den Fig. 1, 2 und 3 zusammen ergibt, im wesentlichen quaderförmig ausgebildet, wobei an seiner Oberseite beidseits der Längsmittelebene des Tanklöschfahrzeuges 1 abnehmbare Tankdeckel 8 vorgesehen sind. Diese Tankdeckel 8 sind vom Laderaum 3 her beispielsweise nach Hochschieben von Aluminiumrolläden 9, zugänglich. Dieses Aluminiumrolläden 9 - beispielsweise je zwei auf einer Längsseite - schließen die seitlich eines Motors 10 und eines davor befindlichen Schaltgetriebes 11 vorhandenen Räume für Gerätschaften ab. Der Motor 10 und das Getriebe 11 sind dabei in Fig. 1 nur ganz schematisch mit gestrichelten Linien veranschaulicht, um so deren Lage im Tanklöschfahrzeug 1 zu veranschaulichen.

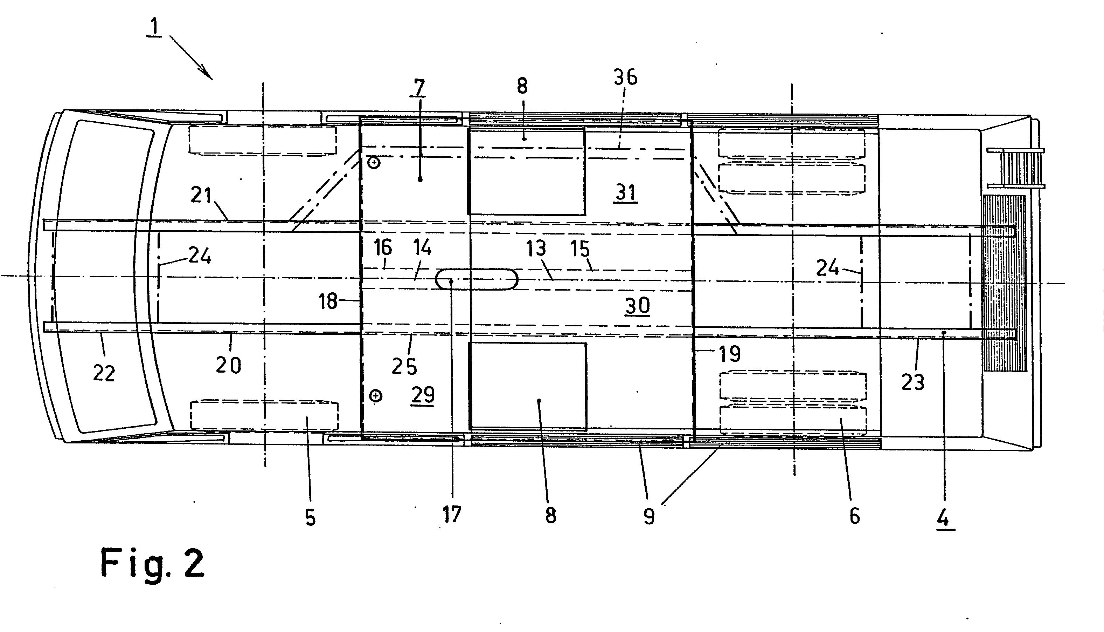

Vor dem Schaltgetriebe 11 ist ein in Fig. 1 ebenfalls nur ganz schematisch angedeutetes Verteilergetriebe 12 vorgesehen, wobei sich eine Kardanwelle 13 schräg nach hinten und eine andere Kardanwelle 14 schräg nach vorne erstreckt, und zwar in Richtung zur jeweiligen Achse des hier mit Allradantrieb ausgerüsteten Tanklöschfahrzeuges 1. Zur Durchführung der Kardanwellen 13, 14 sind sich in der Längsmittelebene des Tanklöschfahrzeuges 1 erstreckende schräge, röhrenförmige Tunnel oder Schächte 15 bzw. 16 vorgesehen, die z.B. einen kreisförmigen oder aber elliptischen Querschnitt aufweisen, und die sich von einer Öffnung 17 an der Tankoberseite quer durch das Tankinnere zur vorderen bzw. hinteren Querwand 18 bzw. 19 des Löschmitteltanks 7 erstrecken. Die Öffnung 17 kann dabei in Draufsicht länglich-oval, wie in Fig. 2 dargestellt, oder aber auch z.B. kreisförmig sein, je nach dem Platzbedarf für das Verteilergetriebe 12.

Der Fahrzeugrahmen 4 weist zwei im Querschnitt beispielsweise C-förmige Längsträger 20, 21 auf, die in den vom Löschmitteltank 7 nach vorne bzw. nach hinten auskragenden Teilen oder Abschnitten 22 bzw. 23 zur Erzielung von an sich herkömmlichen Leiterrahmen durch in Fig. 2 mit strichpunktierten Linien angedeutete Querstreben 24 miteinander verbunden sind. (In ähnlicher Weise bilden im übrigen die Tankquerwände 18, 19 Querstreben des Fahrzeugrahmens 4.) In diesen auskragenden vorderen und hinteren Teilen 22, 23 besitzen die Längsträger 20, 21 eine geringere Höhe als in ihrem mittleren Abschnitt 25, im Bereich des Löschmitteltanks 7, wobei die Oberseiten der Längsträger 20, 21 in einer Ebene liegen und an der Unterseite jeweils ein Übergang zum eine größere Höhe aufweisenden mittleren Trägerabschnitt 25 über Abschrägungen 26 bzw. 27 bewerkstelligt ist. Diese abgeschrägten Trägerbereiche 26, 27 durchstoßen die Querwände 18 bzw. 19 des Löschmitteltanks 7, wodurch unterhalb von ihnen im Tankinneren Durchlässe verbleiben, wie in Fig. 1 bei 28 angedeutet ist, die die drei durch die Unterteilung des Tankinneren aufgrund der Längsträger 20, 21 ansonsten vorhandenen Kammern 29, 30 und 31 (Fig. 2) miteinander in der Art eines kommunizierenden Gefäßes verbunden sind, so daß auch eine vollständige Entleerung aller Kammern des Löschmitteltanks 7 von nur einer Seite her möglich ist. Andererseits wird durch die im wesentlichen über die volle Höhe des Tankinneren reichenden mittleren Abschnitte 25 der Längsträger 20 bzw. 21 eine besonders hohe Festigkeit und Stabilität erzielt.

Die Längsträger 20, 21 sind in nicht näher veranschaulichten, mit einer Gestalt entsprechend dem Profil dieser Längsträger ausgebildeten Schlitzen in den Querwänden 18 bzw. 19 aufgenommen und dort auf ihren gesamten Umfang, d.h. längs des gesamten C-Profils, mit der jeweiligen Querwand 18 bzw. 19 verschweißt. Die an der Tankoberseite vorgesehene Tankabdeckung 32 kann falls erwünscht mit geringem Abstand (z.B. 10 oder 20 mm, im Vergleich zu einer Gesamthöhe des Tanks 7 von z.B. ca. 500 mm) von den oberen horizontalen Flanschen der Längsträger 20, 21 vorgesehen sein, was aber in der Zeichnung nicht näher dargestellt ist.

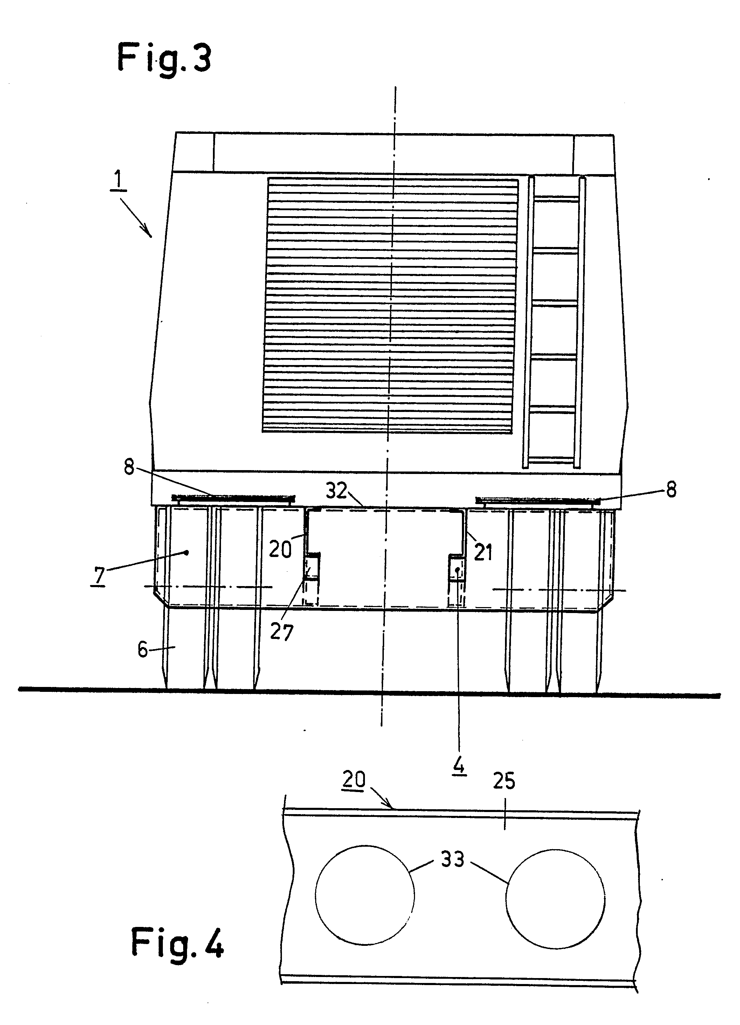

Im Tankinnern sind die Längsträger 20, 21 als Schwallwände ausgebildet, wozu sie, wie aus Fig. 4 im Fall des einen Längsträgers 20 ersichtlich ist, mit kreisförmigen Durchtrittsöffnungen 33 versehen sein können. Der Durchmesser dieser Durchtreittsöffnungen 33 kann dabei beispielsweise ungefähr gleich der halben Höhe der Längsträger 20 (bzw. 21) in ihrem mittleren, höheren Abschnitt 25 sein, und der Mittenabstand dieser Durchtrittsöffnungen 33 kann ungefähr gleich dem doppelten Durchmesser sein.

Aus Korrosionsschutzgründen sind alle Metallteile im Inneren des Löschmitteltanks 7 mit einem in der Zeichnung nicht dargestellten korrosionsfesten Schutzüberzug aus Kunststoff versehen. Weiters sind die Wände des Löschmitteltanks 7, vorzugsweise innen, mit einer in der Zeichnung ebenfalls nicht näher veranschaulichten wärmeisolierenden Verkleidung ausgestattet. Dabei kann diese, beispielsweise aus Polyurethanschaumstoff bestehende, wärmeisolierende Verkleidung der Tankwände zugleich den Korrosionsschutzüberzug bilden.

Im Heck des Tanklöschfahrzeuges 1 kann eine in der Zeichnung nicht dargestellte Löschwasserpumpe angebracht sein, die über ein Zwischengetriebe vom - benachbart angeordneten - Motor 10 her angetrieben werden kann. Dabei ist beispielsweise der Heckteil des Tanklöschfahrzeuges 1 am hinteren Ende mittels einer Klappe 34 (Fig. 1) abgeschlossen, die den Zutritt zu dieser Löschwasserpumpe und zu einer üblichen, nicht näher dargestellten Schnellangriffseinrichtung, etwa mit einem 40 m langen formfesten Schlauch, ermöglicht.

Bei der beschriebenen Konstruktion kann ein ebener Fahrzeugboden vorgesehen werden, was aus Gründen der Sicherheit, der Kosten sowie auch im Hinblick auf eine große Innenraumhöhe der Fahrer-bzw. Mannschaftskabine 2 von Vorteil ist. Auch kann die Fahrer-bzw. Mannschaftskabine 2 starr - anstatt wie bei früher vielfach verwendeten Tanklöschfahrzeugen kippbar - ausgeführt werden, wodurch wiederum problemlos eine Ausführung der Kabine 2 mit großen Glasflächen auf drei Seiten ermöglicht wird, was für den Fahrer aus Gründen einer ausgezeichneten Aus-und übersicht vorteilhaft ist.

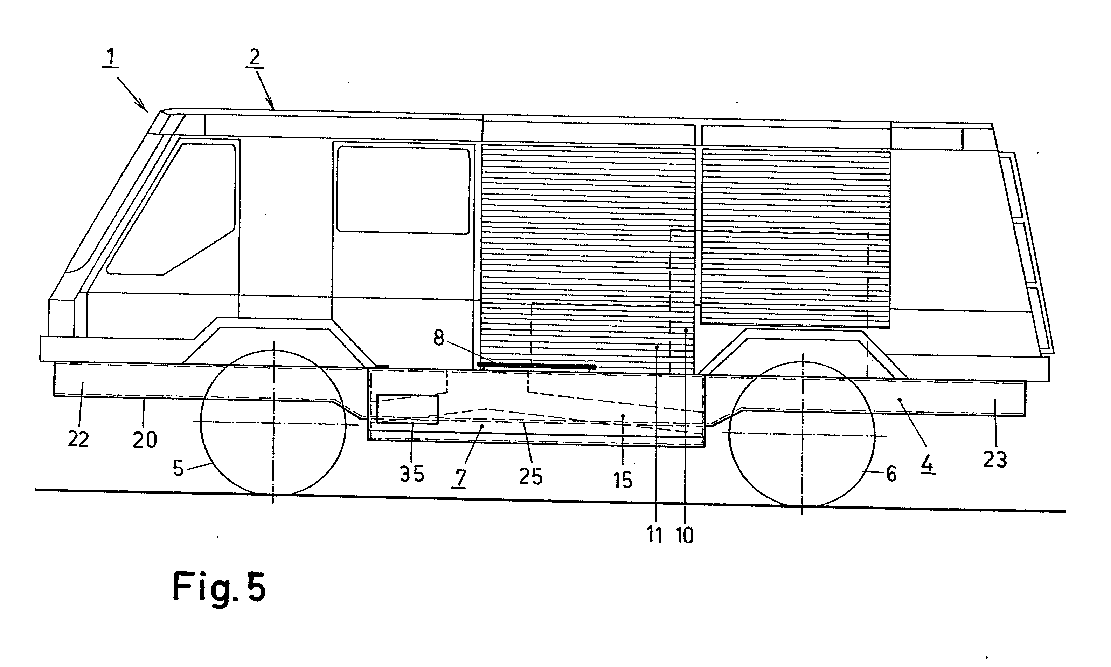

Das Tanklöschfahrzeug 1 gemäß Fig. 5 entspricht im wesentlichen dem vorstehend anhand der Fig. 1 bis 4 erläuterten Tanklöschfahrzeug 1, so daß sich eine ausführliche Beschreibung erübrigen kann. Ein Unterschied ist nur darin gelegen, daß die Längsträger des Fahrzeugrahmens 4 (in Fig. 5 ist nur der Längsträger 20 ersichtlich) im mittleren Abschnitt 25 im Inneren des Löschmitteltanks 7 zwar eine größere Höhe als in den auskragenden Teilen 22, 23 aufweisen, jedoch nicht bis zum Boden des Löschmitteltanks 7 reichen. Dadurch können die durch die beiden Längsträger gebildeten drei Kammern des Löschmitteltanks 7 unterhalb dieser Längsträger miteinander über die gesamte Tanklänge in Verbindung stehen.

Im übrigen ist aus Fig. 5 auch ein schematisch bei 35 angedeuteter stufenförmiger Aufstieg zur Fahrer-bzw. Mannschaftskabine 2 zu ersehen.

Wenn die Erfindung vorstehend anhand von besonders bevorzugten Ausführungsbeispielen näher erläutert wurde, so ist doch selbstverständlich, daß weitere Abwandlungen und Modifikationen möglich sind, ohne daß der Rahmen der Erfindung verlassen wird. So ist es beispielsweise möglich, die Längsträger 20, 21 in ihren mittleren Abschnitten 25 seitlich auswärts gekröpft vorzusehen, so daß sie mit diesen Abschnitten 25 direkt die Längsseitenwände des Löschmitteltanks 7 bilden, wie in Fig. 2 schematisch für den Längsträger 21 mit strichpunktierter Linie bei 36 angedeutet ist. Ferner ist es möglich, statt eines Allradantriebs nur einen herkömmlichen Hinterradantrieb vorzusehen, und es könnte auch eine. doppelte Hinterachse vorhanden sein. Die Gestalt des Löschmitteltanks 7 kann auch anders als quader-oder kastenförmig sein, wobei es insbesondere auch möglich ist, die Querwände 18, 19 dreieckförmig, mit der Spitze zur jeweiligen Achse hin, zu gestalten, um ein noch größeres Tankvolumen zu erzielen.

**Ansprüche**

1. Tanklöschfahrzeug (1) mit einem Fahrzeugrahmen (4), der eine Fahrer-bzw. Mannschaftskabine (2) und einen Laderaum (3) sowie eine vordere und wenigstens eine hintere Radachse trägt, und mit einem flachen, tiefliegend angebrachten Löschmitteltank (7), dadurch gekennzeichnet, daß der Löschmitteltank (7) in der Ebene des starr ausgebildeten Fahrzeugrahmens (4) zwischen den Radachsen angeordnet und in diesen Fahrzeugrahmen integriert ist.

2. Tanklöschfahrzeug nach Anspruch 1, dadurch gekennzeichnet, daß die vom Löschmitteltank (7) nach vorne und nach hinten auskragenden Teile (22, 23) des Fahrzeugrahmens (4) als Leiterrahmen ausgebildet sind.

3. Tanklöschfahrzeug nach Anspruch 1 oder 2, dadurch gekennzeichnet, daß der Fahrzeugrahmen (4) zwei durch den Löschmitteltank (7) hindurchgehende Längsträger (20, 21) aufweist, die die vordere und die hintere Querwand (18, 19) des Löschmitteltanks durchsetzen und mit diesen Querwänden fest verbunden sind.

4. Tanklöschfahrzeug nach Anspruch 3, dadurch gekennzeichnet, daß die Längsträger (20, 21) in vertikalen Schlitzen in den Querwänden (18, 19) des Löschmitteltanks (7) aufgenommen und mit den Querwänden längs ihres Umfangs verschweißt sind.

5. Tanklöschfahrzeug nach Anspruch 3 oder 4, dadurch gekennzeichnet, daß die Längsträger (20, 21) im Bereich des Löschmitteltanks (7) eine größere Höhe als in ihren auskragenden Teilen (22, 23) aufweisen.

6. Tanklöschfahrzeug nach Anspruch 5, dadurch gekennzeichnet, daß die Längsträger (20, 21) im Inneren des Löschmitteltanks (7) eine Höhe im wesentlichen gleich dessen Höhe aufweisen und über an der Unterseite vorgesehene Abschrägungen (26, 27), die noch im Tankinneren zur Belassung von Durchgängen (28) für das Löschmittel unterhalb der das Tankinnere ansonsten in Kammern (29, 39, 31) unterteilenden Längsträger (20, 21) beginnen, in die auskragenden Teile (22, 23) übergehen.

7. Tanklöschfahrzeug nach einem der Ansprüche 3 bis 6, dadurch gekennzeichnet, daß die Längsträger (20, 21) im Inneren des Löschmitteltanks (7) als Schwallwände ausgebildet sind.

8. Tanklöschfahrzeug nach Anspruch 7, dadurch gekennzeichnet, daß die Längsträger (20) zur Ausbildung als Schwallwände kreisförmig Durchtrittsöffnungen (33) aufweisen.

9. Tanklöschfahrzeug nach Anspruch 1 oder 2, dadurch gekennzeichnet, daß der Fahrzeugrahmen (4) zwei Längsträger (20, 21) aufweist, die zugleich die Längsseitenwände (36) des Löschmitteltanks (7) bilden.

10. Tanklöschfahrzeug nach einem der Ansprüche 1 bis 9, dadurch gekennzeichnet, daß Motor (10) und Getriebe (11) des Fahrzeuges auf dem Fahrzeugrahmen (4) angeordnet sind und sich zumindest ein röhrenförmiger Tunnel (15, 16) für die Durchführung einer Kardanwelle (13, 14) im Tankinneren von einer Öffnung (17) an der Tankoberseite zur entsprechenden Tankquerwand (18 bzw. 19) erstreckt.

11. Tanklöschfahrzeug nach einem der Ansprüche 1 bis 10, dadurch gekennzeichnet, daß zumindest die Innenseite des Löschmitteltanks (7) sowie falls vorhanden die hindurchgehenden Längsträger (20, 21) und/oder der oder die Kardanwellen-Tunnel (15, 16) mit einem korrosionsbeständigem Schutzüberzug, insbesondere aus Kunststoff, versehen sind.

12. Tanklöschfahrzeug nach einem der Ansprüche 1 bis 11, dadurch gekennzeichnet, daß die Wände des Löschmitteltanks (7), insbesondere auf der Innenseite, mit einer wärmeisolierenden Verkleidung ausgestattet sind.

Fig. 1

Fig. 2

# Fig.3

1

8

32

8

20

21

7

27

6

4    25

20

33

# Fig.4

Fig. 5

0 252 202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 358 292 (SOCIETE DE FABRICATION ET DE VENTE DE MATERIELS AERAULIQUES ET THERMIQUES STEMAT SA) * Seiten 2,3; Abbildungen * | 1-3,6, 9-11 | A 62 C 27/00 B 62 D 21/16 |
| Y | GB-A- 296 445 (WELTI-FURRER AG) * Seiten 1,2; Abbildungen * | 1-3,6, 9-11 | |

RECHERCHIERTE SACHGEBIETE (Int. Cl.4)

B 62 D
A 62 C

Der vorliegende Recherchenbericht wurde für alle Patentansprüche erstellt.

| Recherchenort | Abschlußdatum der Recherche | Prüfer |
|---|---|---|
| DEN HAAG | 05-10-1986 | WOHLRAPP R.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82